(19) **Europäisches Patentamt / European Patent Office / Office européen des brevets**

(11) **EP 4 571 923 A1**

(12) **EUROPEAN PATENT APPLICATION**
published in accordance with Art. 153(4) EPC

(43) Date of publication:
**18.06.2025 Bulletin 2025/25**

(21) Application number: **23912900.0**

(22) Date of filing: **26.12.2023**

(51) International Patent Classification (IPC):
$H01M\ 10/0567^{(2010.01)}$ $\quad H01M\ 4/36^{(2006.01)}$
$H01M\ 4/38^{(2006.01)}$ $\quad H01M\ 4/62^{(2006.01)}$
$H01M\ 10/052^{(2010.01)}$ $\quad H01M\ 10/0569^{(2010.01)}$

(52) Cooperative Patent Classification (CPC):
**H01M 4/36; H01M 4/38; H01M 4/62; H01M 10/052;
H01M 10/0567; H01M 10/0568; H01M 10/0569;
Y02E 60/10**

(86) International application number:
**PCT/KR2023/021619**

(87) International publication number:
**WO 2024/144225 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220185078**

(71) Applicant: **LG Energy Solution, Ltd.
Seoul 07335 (KR)**

(72) Inventors:
• **KIM, Myeong-Seong
Daejeon 34122 (KR)**
• **KIM, Ki-Hyun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTROLYTE FOR LITHIUM SULFUR BATTERIES AND LITHIUM SULFUR BATTERIES COMPRISING SAME**

(57) An electrolyte for a lithium-sulfur battery according to the present disclosure includes an organic solvent; a lithium salt; and an additive, wherein the additive includes tantalum pentafluoride ($TaF_5$). The electrolyte for the lithium-sulfur battery including tantalum pentafluoride improves life characteristics of the lithium-sulfur battery.

FIG. 1

Cycle life of lithium-sulfur battery

**Description**

TECHNICAL FIELD

The present disclosure relates to a lithium-sulfur battery with improved life characteristics. The present application claims priority to Korean Patent Application No. 10-2022-0185078 filed on December 26, 2022 in the Republic of Korea, the disclosure of which is incorporated herein by reference.

BACKGROUND ART

As there is increasing attention paid to energy storage technology, with an extended range of applications as sources of energy for mobile phones, tablets, laptop computers, camcorders, electric vehicles (EVs) and hybrid electric vehicles (HEVs), more efforts are being made in the research and development of electrochemical devices. In this aspect, in the field of electrochemical devices, attention is directed to development of secondary batteries that can be recharged, such as lithium-sulfur batteries, and more recently, in the development of batteries, to improve capacity density and specific energy, research and development efforts are devoted to new electrode and battery designs.

Among electrochemical devices, lithium-sulfur (LiS) batteries are attracting attention as a next-generation secondary battery that can replace lithium ion batteries due to high energy density. Lithium sulfur is used as a positive electrode active material, and reduction reaction of sulfur and oxidation reaction of lithium metal occur in lithium-sulfur batteries during discharging, and in this instance, lithium polysulfide (Li2S2, Li2S4, Li2S6, Li2S8) of linear structure is produced from sulfur ($S_8$) of ring structure, and lithium-sulfur batteries show the gradual discharge voltage until polysulfide (PS) is completely reduced to LiS. However, the lithium polysulfide reacts with electrolytes, causing side reaction, resulting in battery degradation.

Additionally, negative electrodes of lithium-sulfur batteries may use lithium metal, and life characteristics decrease due to dendrite growth and porousization at lithium metal electrodes with increasing charge and discharge cycles.

Additionally, to achieve high energy density of lithium-sulfur batteries, it is necessary to reduce the amount of electrolytes, but when the amount of electrolytes reduces, the concentration of lithium polysulfide increases, which accelerates side reaction with lithium metal electrodes, resulting in shorter battery life.

SUMMARY

Technical Problem

The present disclosure is directed to providing an electrolyte for a lithium-sulfur battery for improving life characteristics of the lithium-sulfur battery.

The present disclosure is further directed to providing a lithium-sulfur battery with high energy density and improved life characteristics.

Technical Solution

To solve the above-described problem, according to an aspect of the present disclosure, there is provided an electrolyte for a lithium-sulfur battery or a lithium-sulfur battery of the following embodiments.

The electrolyte for the lithium-sulfur battery according to a first embodiment includes an organic solvent; a lithium salt; and an additive, wherein the additive includes tantalum pentafluoride ($TaF_5$).

According to a second embodiment, in the first embodiment, the tantalum pentafluoride is included in an amount of 0.1 to 1 wt% based on a total weight of the electrolyte for the lithium-sulfur battery.

According to a third embodiment, in the first or second embodiment, the tantalum pentafluoride is included in an amount of 0.3 to 0.7 wt% based on a total weight of the electrolyte for the lithium-sulfur battery.

According to a fourth embodiment, in any one of the first to third embodiments, the organic solvent includes an acyclic ether or a cyclic ether.

According to a fifth embodiment, in any one of the first to fourth embodiments, the lithium salt includes at least one selected from LiFSI, LiTFSI, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, and $LiB(C_2O_4)_2$.

According to a sixth embodiment, in any one of the first to fifth embodiments, the additive includes at least one selected from lithium nitrate ($LiNO_3$) potassium nitrate ($KNO_3$), cesium nitrate ($CsNO_3$), magnesium nitrate ($MgNO_3$), barium nitrate ($BaNO_3$), potassium nitrite ($KNO_3$) and cesium nitrite ($CsNO_3$).

According to a seventh embodiment, the lithium-sulfur battery includes a positive electrode; a negative electrode;

a separator between the positive electrode and the negative electrode; and an electrolyte, wherein the electrolyte is defined in any one of the first to sixth embodiments, the positive electrode includes a sulfur-carbon composite as a positive electrode active material, and the negative electrode includes a lithium metal as a negative electrode active material.

According to an eighth embodiment, in the seventh embodiment, the electrolyte for the lithium-sulfur battery is included in an amount of 300 wt% or less based on 100 wt% of the sulfur-based material.

According to a ninth embodiment, in the seventh or eighth embodiment, the sulfur-carbon composite includes a sulfur-based material supported on a porous carbon material, and the sulfur-based material is included in an amount of 60 wt% or more based on 100 wt% of the sulfur-carbon composite.

According to a tenth embodiment, in any one of the seventh to ninth embodiments, the negative electrode includes a negative electrode active material layer and a protective layer on at least one surface of the negative electrode active material layer, and the protective layer includes LiF.

Advantageous Effects

The electrolyte for the lithium-sulfur battery according to the present disclosure may improve the life characteristics of the lithium-sulfur battery and increase the energy density of the battery.

The present disclosure may have many other effects, and these effects will be described in each embodiment, and with regard to effects that can be easily inferred by those skilled in the art, the corresponding description is omitted.

BRIEF DESCRIPTION OF THE DRAWING

The accompanying drawing illustrates exemplary embodiments of the present disclosure and together with the foregoing detailed description, serve to provide a further understanding of the technical aspect of the present disclosure, and the scope of the present disclosure is not limited thereto. In the drawing, for clarity of description, the shape, size, scale or proportion of the elements may be exaggerated for emphasis.

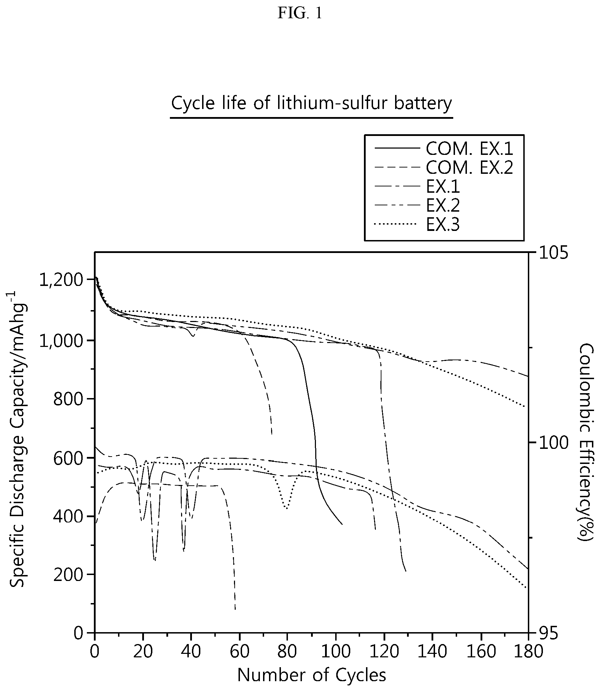

FIG. 1 shows Coulombic efficiency and capacity vs cycle life in Example and Comparative Example according to the present disclosure.

DETAILED DESCRIPTION

Hereinafter, the present disclosure will be described in detail with reference to the accompanying drawing. It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations shown in the drawings are provided to describe exemplary embodiments of the present disclosure, but not intended to fully describe the technical aspect of the present disclosure, so it should be understood that a variety of other equivalents and variations could have been made thereto at the time the application was filed.

The term "comprise", "include" or "have" when used in the present disclosure, specifies the presence of stated elements, but does not preclude the presence or addition of one or more other elements, unless the context clearly indicates otherwise.

The terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

In the present disclosure, A and/or B refers to either A or B or both.

Unless the context clearly indicates otherwise, temperature is indicated on the Celsius scale, and its unit is °C.

The present disclosure relates to an electrolyte for a lithium-sulfur battery and a lithium-sulfur battery including the electrolyte. The lithium-sulfur battery includes a sulfur-based material as a positive electrode active material. In the present disclosure, the sulfur-based material includes at least one selected from sulfur and a sulfur compound, and it will be described in more detail below.

A first aspect of the present disclosure relates to an electrolyte for a lithium-sulfur battery.

The electrolyte for the lithium-sulfur battery according to an aspect of the present disclosure includes an organic solvent; a lithium salt and an additive, and the additive includes tantalum pentafluoride ($TaF_5$). The addition of the tantalum pentafluoride to the electrolyte for the lithium-sulfur battery may improve energy density and life characteristics of the lithium-sulfur battery.

In an embodiment of the present disclosure, the tantalum pentafluoride may be included in an amount of 0.1 to 1 wt%, or 0.3 to 0.7 wt% based on the total weight of the electrolyte for the lithium-sulfur battery.

When the tantalum pentafluoride is included in the aforementioned range, it may be possible to further improve energy density and life characteristics of the lithium-sulfur battery.

In an embodiment of the present disclosure, the organic solvent may include acyclic ether and/or cyclic ether. Additionally, the acyclic ether and the cyclic ether may be included at a weight ratio of 0.5:9.5 to 5:5. When the acyclic ether and the cyclic ether are included at the aforementioned weight ratio, it may be more advantageous for the effect of the tantalum pentafluoride on the improved energy density and life characteristics of the lithium-sulfur battery.

The acyclic ether may include at least one selected from the group consisting of dimethylether, diethylether, dipropylether, methyl ethyl ether, methylpropylether, ethylpropylether, dimethoxyethane, diethoxyethane, ethyleneglycolethylmethylether, diethyleneglycoldimethylether, diethyleneglycoldiethylether, diethyleneglycol methyl ethyl ether, triethyleneglycoldimethylether, triethyleneglycoldiethylether, triethyleneglycolmethylethylether, tetraethyleneglycoldimethylether, tetraethyleneglycoldiethylether, tetraethyleneglycolmethylethylether, polyethyleneglycoldimethylether, polyethylene glycol diethyl ether, and polyethylene glycol methylethyl ether.

The cyclic ether may include at least one selected from the group consisting of 1,3-dioxolane, 4,5-dimethyl-dioxolane, 4,5-diethyl-dioxolane, 4-methyl -1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether, furan, 2-methyl furan, 3-methyl furan, 2-ethyl furan, 2-butyl furan, 2,3-dimethylfuran, 2,4-dimethylfuran, 2,5-dimethyl furan, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene and 2,4-dimethylthiophene and 2,5-dimethylthiophene.

In an embodiment of the present disclosure, the lithium salt may include, without limitation, any compound that provides lithium ions commonly used in lithium-sulfur batteries. For example, the lithium salt may include at least one selected from LiFSI, LiTFSI, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, and $LiB(C_2O_4)_2$.

The lithium salt is preferably used at the concentration in a range between 0.1M and 2.0M. When the concentration of the lithium salt is included in the aforementioned range, the electrolyte may have optimum conductivity and viscosity and exhibit the outstanding electrolyte performance, contributing to the effective movement of lithium ions.

In an embodiment of the present disclosure, the additive may include a nitrate-based compound, and the nitrate-based compound may include at least one selected from lithium nitrate ($LiNO_3$,) potassium nitrate ($KNO_3$), cesium nitrate ($CsNO_3$), magnesium nitrate ($MgNO_3$), barium nitrate ($BaNO_3$), potassium nitrite ($KNO_2$) and cesium nitrite ($CsNO_2$). In this instance, the additive may be included in an amount of 0.1 wt% to 10 wt% based on the total weight of the electrolyte. When the additive includes the nitrate-based compound, the energy density and life characteristics of the lithium-sulfur battery may be further improved.

In addition to the nitrate-based compound, the additive may further include at least one type of additive, for example, haloalkylenecarbonate-based compounds such as difluoroethylenecarbonate, pyridine, triethylphosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol or aluminum trichloride to improve life characteristics of the battery, suppress capacity fading of the battery and improve discharge capacity of the battery.

A second aspect of the present disclosure relates to a lithium-sulfur battery including the above-described electrolyte for the lithium-sulfur battery.

The lithium-sulfur battery according to an aspect of the present disclosure includes a positive electrode; a negative electrode; a separator between the positive electrode and the negative electrode; and an electrolyte, wherein the electrolyte is the above-described electrolyte for the lithium-sulfur battery according to the present disclosure, the positive electrode includes a sulfur-carbon composite as a positive electrode active material, and the negative electrode includes lithium metal as a negative electrode active material. When the above-described electrolyte for the lithium-sulfur battery is used as the electrolyte, $TaF_5$ may react with the lithium metal of the negative electrode to form a protective layer. The protective layer will be described below.

In an embodiment of the present disclosure, the positive electrode may include a positive electrode current collector and a positive electrode active material layer on at least one surface of the positive electrode current collector. Additionally, the positive electrode may be a free-standing type including only the positive electrode active material layer.

In an embodiment of the present disclosure, the positive electrode current collector is not limited to a particular type and may include any positive electrode current collector that supports the positive electrode active material, and has high conductivity without causing any chemical change in the corresponding battery. For example, the positive electrode current collector may include copper, stainless steel, aluminum, nickel, titanium, palladium, sintered carbon, copper or stainless steel treated with carbon, nickel or silver on the surface, aluminum-cadmium alloys, etc.

The positive electrode current collector may have its microtextured or microhole textured surface to increase the bonding strength with the positive electrode active material, and may come in various forms, for example, a film, a sheet, a foil, a mesh, a net, a porous body, a foam, a nonwoven, etc.

**In** an embodiment of the present disclosure, the positive electrode active material layer may include the positive electrode active material and a binder polymer, and optionally, may further include a conductive material and an additive. The positive electrode active material includes the sulfur-carbon composite, and the sulfur-carbon composite includes a sulfur-based material supported on a porous carbon material. Here, the sulfur-based material may include sulfur and/or sulfide.

The sulfur-carbon composite may be included in an amount of 50 to 95 wt%, 60 to 95 wt% or 70 to 90 wt% based on 100 wt% of the positive electrode active material layer. When the sulfur-carbon composite is included in the aforementioned range, the positive electrode may cause sufficient electrochemical reaction, and the lithium-sulfur battery may ensure sufficient energy density.

The sulfur-based material may include, specifically, at least one selected from the group consisting of inorganic sulfur ($S_8$), $Li_2Sn$ ($n\geq1$), disulfide compounds such as 2,5-dimercapto-1,3,4-thiadiazole, 1,3,5-trithiocyanuic acid and organic sulfur compounds. Preferably, the sulfur-based material may include inorganic sulfur ($S_8$). The sulfur-based material may further include at least one type of additive selected from transition metal elements, Group IIIA elements, Group IVA elements, compounds of these elements and sulfur and alloys of these elements and sulfur. The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au, Hg, etc., the Group IIIA elements may include Al, Ga, In, Tl, etc., and the Group IVA elements may include Ge, Sn, Pb, etc.

The porous carbon material may be a crystalline carbon material or an amorphous carbon material, and may be a conductive carbon. The porous carbon material provides skeletons for uniformly and stably immobilizing the sulfur-based material and compensates for low electrical conductivity of the sulfur-based material, to enhance electrochemical reaction.

The porous carbon material may be manufactured by carbonization of a variety of carbon-based precursors, and may include irregularities and/or pores therein. The average diameter of the pores may be from 1 nm to 200 nm, and the porosity may be from 10 vol% to 90 vol% of the total volume of the porous carbon material. When the average diameter of the pores satisfies the aforementioned range, the mechanical strength of the porous carbon material may be maintained.

The porous carbon material may include, without limitation, any porous carbon material commonly used in lithium-sulfur batteries, for example, spherical, rod-like, spiky, platy, tubular or bulky. Additionally, the porous carbon material may have high specific surface area. For example, the porous carbon material may include at least one selected from the group consisting of graphite, graphene, Super P, carbon black, Denka black, acetylene black, Ketjen black, channel black, furnace black, lamp black, thermal black, carbon fibers, carbon nanofibers, carbon nanotubes (SWCNT, MWCNT), carbon nanowires, carbon nanorings, carbon fabrics and fullerene (C60).

The porous carbon material may be an agglomerate of conductive carbon materials. Specifically, the porous carbon material may be formed by entanglement of linear conductive carbon material strands.

The sulfur-carbon composite may include the sulfur-based material in an amount of 60 wt% or more, 60 to 90 wt% or 70 to 90 wt% based on 100 wt% of the sulfur-carbon composite. When the sulfur-based material is included in the aforementioned range, the sulfur-based material and the porous carbon material are present in appropriate amounts, so the binder polymer may be used in a suitable amount for binding the sulfur-based material to the porous carbon material. Accordingly, there is no need to use an excessive amount of binder polymer that may cause a resistance rise, thereby improving the battery performance of the lithium-sulfur battery.

In the sulfur-carbon composite, the sulfur-based material may fill at least a portion of the internal space (for example, pores) of the porous carbon material, or along with or independent of this, may be located on the outer side in a manner of coating at least a portion of the surface of the carbon-based material. In a specific embodiment, the sulfur-based material may be present in an area of less than 100%, 1 to 95% or 60 to 90% of the surface of the porous carbon material. When the sulfur-based material is present in the aforementioned range, electrolyte wetting and electrical conductivity improves.

A method for manufacturing the sulfur-carbon composite may include any method commonly used in the art without limitation. For example, the sulfur-carbon composite may be manufactured by mixing sulfur with the porous carbon material and performing thermal treatment.

The sulfur-based material is converted to polysulfide during electrochemical reaction of the lithium-sulfur battery, and the polysulfide leaks into the electrolyte of the lithium-sulfur battery, and as a consequence, the positive electrode active material gradually reduces and the positive electrode structure collapses. However, in the present disclosure, because the sulfur-based material is present inside the porous carbon material of 3-dimensional (3D) structure, the leakage of polysulfide produced by electrochemical reaction into the electrolyte may be prevented, and because the porous carbon material has the 3D structure, the collapse of the positive electrode structure induced by the polysulfide leakage may be prevented.

The binder polymer binds the positive electrode active material to the positive electrode current collector and interconnects the positive electrode active material to increase the bond strength, and may include any binder polymer well known in the art. For example, the binder polymer may include any one selected from the group consisting of a fluororesin-based binder including polyvinylidene fluoride (PVdF) or polytetrafluoroethylene (PTFE); a rubber-based binder including styrene butadiene rubber (SBR), acrylonitrile-butadiene rubber and styrene-isoprene rubber; a cellulose-based binder including carboxyl methyl cellulose (CMC), starch, hydroxypropyl cellulose and regenerated cellulose; a polyalcohol-based binder; a polyolefin-based binder including polyethylene and polypropylene; a polyimide-based binder; a polyester-based binder; a polyacrylic binder; and a silane-based binder or a mixture thereof or a copolymer thereof.

The binder polymer may be included in an amount of 0.5 to 30 wt% based on 100 wt% of the positive electrode active material layer. When the amount of the binder polymer satisfies the aforementioned range, the physical properties of the positive electrode improve, thereby preventing desorption of the active material and/or the conductive material in the positive electrode, and the ratio of the active material and/or the conductive material in the positive electrode may be appropriated controlled, thereby ensuring battery capacity.

The conductive material acts as movement paths of electrons from the current collector to the positive electrode active material by electrically connecting the electrolyte solution to the positive electrode active material, and may include any material having conductive properties without limitation. For example, the conductive material may include carbon black such as Super-P, Denka black, acetylene black, Ketjen black, channel black, furnace black, lamp black, thermal black, carbon black, etc.; carbon derivatives such as carbon nanotubes, graphene, fullerene, etc.; conductive fibers such as carbon fibers, metal fibers, etc; fluorocarbon, metal powders such as aluminum powder, nickel powder, etc.; or conductive polymers such as polyaniline, polythiophene, polyacetylene, polypyrrole, etc, used singly or in combination. The conductive material may be included in an amount of 0.01 to 30 wt%, 0.01 to 10 wt% or 0.01 to 5 wt% based on 100 wt% of the positive electrode active material layer. When the conductive material is included in the aforementioned range, it may be possible to improve the movement of electrons from the current collector to the positive electrode active material.

A method for forming the positive electrode active material layer on the current collector is known coating methods and not particularly limited. For example, the coating method may include bar coating, screen coating, doctor blade, dip coating, reverse roll coating, direct roll coating, gravure coating or extrusion. The coating amount of the positive electrode active material layer on the current collector is not particularly limited and is adjusted in view of the target thickness of the positive electrode active material layer. Additionally, a known process required to manufacture the electrode, for example, a rolling or drying process may be performed before or after forming the positive electrode active material layer.

In an embodiment of the present disclosure, the negative electrode may be a free-standing type including only a negative electrode active material layer without a current collector. Additionally, the negative electrode may include a negative electrode current collector and a negative electrode active material layer on at least one surface of the negative electrode current collector.

In an embodiment of the present disclosure, the negative electrode current collector may include, without limitation, any negative electrode current collector that supports the negative electrode active material and has high conductivity without causing any chemical change in the corresponding battery. For example, the negative electrode current collector may include copper, stainless steel, aluminum, nickel, titanium, palladium, sintered carbon, copper or stainless steel treated with carbon, nickel or silver on the surface, aluminum-cadmium alloys, etc.

The negative electrode current collector may have its microtextured or microhole textured surface to increase the bonding strength with the negative electrode active material, and may come in various forms, for example, a film, a sheet, a foil, a mesh, a net, a porous body, a foam, a nonwoven, etc.

The negative electrode current collector may be 1 $\mu$m to 300 $\mu$m in thickness, but the thickness is not limited to a particular range and may be set to an appropriate range in view of the mechanical strength of the electrode, the productivity or the battery capacity.

In an embodiment of the present disclosure, the negative electrode active material layer includes lithium metal. Specifically, the negative electrode active material layer may include at least one of lithium metal or lithium alloy. Specifically, the lithium metal may be a single-phase lithium metal, for example, a lithium metal foil, and the lithium alloy may include an alloy of lithium and at least one of Si, Sn, C, Pt, Ir, Ni, Cu, Ti, Na, K Rb, Cs, Fr, Be, Mg, Ca, Sr, Sb, Pb, In, Zn, Ba, Ra, Ge or Al, but is not limited thereto.

When these materials are used as the negative electrode active material, the energy density may be higher than mixtures of lithium and other materials (for example, carbon and/or silicon) as the negative electrode active material. For example, when the mixtures of lithium and other materials are used as the negative electrode active material, the negative electrode active material is coated on the negative electrode current collector, and in this case, the use of the current collector reduces the amount of the negative electrode active material, and the energy density reduces.

The negative electrode active material layer may be 1 $\mu$m to 200 $\mu$m, 5 $\mu$m to 100 $\mu$m, 10 $\mu$m to 80 $\mu$m or 20 $\mu$m to 50 $\mu$m in thickness. When the thickness of the negative electrode active material layer is within the aforementioned range, it may be possible to suppress the growth of lithium dendrite and ensure sufficient battery capacity.

In an embodiment of the present disclosure, the negative electrode may be a current collector-free type including only the negative electrode active material layer, or may include the negative electrode active material layer on at least one surface of the negative electrode current collector.

The negative electrode current collector may include, without limitation, any current collector that is used in the technical field of lithium secondary batteries and lithium-sulfur batteries, and has high conductivity without causing side reaction in the battery. For example, the negative electrode current collector may include copper, stainless steel, aluminum, nickel, titanium, sintered carbon, copper or stainless steel treated with carbon, nickel, titanium or silver on the surface, aluminum-cadmium alloys, etc.

The negative electrode current collector is not limited to a particular thickness but may be 1 $\mu$m to 300 $\mu$m in thickness, and the thickness may be set to an appropriate range in view of the mechanical strength of the electrode, the productivity or the battery capacity.

In an embodiment of the present disclosure, the negative electrode includes the negative electrode active material layer and the protective layer on at least one of the negative electrode active material layer, and the protective layer may include LiF.

The protective layer may be formed by reaction between $TaF_5$ included in the electrolyte and the lithium metal of the negative electrode. The protective layer may allow for uniform deposition of lithium over the negative electrode, thereby suppressing porousization in the negative electrode. Additionally, the lithium-sulfur battery including the negative electrode may have improved Coulombic efficiency and cycle life.

The protective layer may be formed on all or at least part of the negative electrode active material layer. For example, the protective layer may cover 90% or more of the surface of the negative electrode active material layer.

The protective layer may be formed with uniform thickness, and may be 5 to 500 nm in thickness. When the thickness of the protective layer is within the aforementioned range, it may be possible to prevent an excessive rise in resistance of the negative electrode, properly suppress porousization in the negative electrode and suppress dendrite growth on the negative electrode surface.

In an embodiment of the present disclosure, the separator may include a porous polymer substrate, or may include a porous polymer substrate and a porous coating layer on at least one surface of the porous polymer substrate.

The separator separates the negative electrode from the positive electrode and provides movement paths of lithium ions, and is not limited to a particular type and may include any type of separator commonly used in lithium-sulfur batteries, and in particular, preferably having low resistance to the movement of electrolyte ions and high ability to absorb the electrolyte.

The porous substrate is not limited to a particular material in the present disclosure and may include any porous substrate commonly used in electrochemical devices. For example, the porous substrate may include at least one type of material selected from the group consisting of polyolefin such as polyethylene, polypropylene, etc., polyester such as polyethyleneterephthalate, polybutyleneterephthalate, etc., polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole) and polyarylate.

The porous substrate is not limited to a particular thickness, but may be 1 to 100 $\mu$m, preferably 5 to 50 $\mu$m in thickness. Although the thickness range of the porous substrate is not limited to the aforementioned range, when the thickness is too small below the above-described lower limit, the mechanical properties may decrease and the separator may be easily damaged while the battery is in use.

The average pore diameter and porosity of the porous substrate are not limited to particular ranges but may be 0.001 to 50 $\mu$m and 10 to 95 vol%, respectively.

In an embodiment of the present disclosure, the inorganic particles and the binder included in the porous coating layer are not limited to particular types and may include those commonly used in porous coating layers of separators, and a manufacturing method is not particularly limited.

In the lithium-sulfur battery according to an embodiment of the present disclosure, the electrolyte for the lithium-sulfur battery may be included in an amount of 300 wt% or less based on 100 wt% of the sulfur-based material. Specifically, the amount (E) of the electrolyte for the lithium-sulfur battery and the amount (S) of the sulfur-based material may satisfy the following Equation.

[Equation]

$$(E / S) \times 100 \leq 300 \ (\%)$$

When the lithium-sulfur battery includes the electrolyte in a large amount, the total volume of the lithium-sulfur battery increases or the amount of the positive electrode active material reduces, so the energy density of the lithium-sulfur battery reduces. Accordingly, to improve the energy density of the lithium-sulfur battery, it is necessary to reduce the amount of the electrolyte and increase the amount of the positive electrode active material. However, the existing lithium-sulfur batteries fail to operate when the amount of electrolytes is small.

The lithium-sulfur battery according to the present disclosure may operate well in low electrolyte condition including 300 wt% or less of the electrolyte based on 100 wt% of the sulfur-based material.

Hereinafter, the present disclosure will be described in more detail through examples, but the following examples are provided to describe the present disclosure by way of illustration, and the scope of the present disclosure is not limited thereto.

**Example 1**

<Preparation of electrolyte for lithium-sulfur battery>

Dimethylfuran (2MeF) and dimethylether (DME) were mixed at a weight ratio of 2:8 and 0.75M of LiFSI was added to prepare a mixed solution. Subsequently, $LiNO_3$ and $TaF_5$ were added to the mixed solution to prepare an electrolyte. In this instance, $LiNO_3$ was present in an amount of 5 wt%, and $TaF_5$ was present in an amount of 0.1 wt% based on the total weight of the electrolyte.

<Manufacture of positive electrode>

Sulfur ($S_8$) and multi-walled carbon nanotubes (MWCNT) were uniformly mixed at a weight ratio of 7:3. Subsequently, thermal treatment was performed in an oven of 150°C for 30 minutes to load sulfur into carbon to produce a sulfur-carbon composite.

The obtained sulfur-carbon composite and polyacrylic acid as a binder polymer were added to water and mixed together to prepare a positive electrode slurry. In this instance, a weight ratio of the sulfur-carbon composite to the binder polymer was 96:4.

The slurry was coated on a 20 $\mu$m thick aluminum foil using a Mathis coater, dried at 50°C for 24 hours, then rolled to manufacture a positive electrode. In this instance, the loading of the slurry was 3.3 mAh/cm$^2$, and in the rolling process, the porosity was 72 vol%.

<Manufacture of lithium-sulfur battery>

For a negative electrode, a 60 $\mu$m thick lithium metal foil (Ganfeng) was prepared.

The as-prepared positive and negative electrodes were placed with a polyethylene separator having a thickness 16 $\mu$m and a porosity of 46 vol% interposed between them, and 270 wt% of electrolyte was injected based on the weight of sulfur to manufacture a lithium-sulfur battery.

**Example 2**

A lithium-sulfur battery was manufactured by the same method as Example 1 except that $TaF_5$ was added in an amount of 0.5 wt% based on the total weight of the electrolyte.

**Example 3**

A lithium-sulfur battery was manufactured by the same method as Example 1 except that $TaF_5$ was added in an amount of 1 wt% based on the total weight of the electrolyte.

**Comparative Example 1**

A lithium-sulfur battery was manufactured by the same method as Example 1 except that $TaF_5$ was not added.

**Comparative Example 2**

A lithium-sulfur battery was manufactured by the same method as Example 1 except that $TaF_5$ was added in an amount of 1.2 wt% based on the total weight of the electrolyte.

**Comparative Example 3**

A lithium-sulfur battery was manufactured by the same method as Example 1 except that instead of $TaF_5$, AgF

was added in an amount of 0.5 wt% based on the total weight of the electrolyte.

**Comparative Example 4**

A lithium-sulfur battery was manufactured by the same method as Example 1 except that instead of $TaF_5$, $AlF_3$ was added in an amount of 0.5 wt% based on the total weight of the electrolyte.

**Comparative Example 5**

<Manufacture of positive electrode>

$LiNi_{0.8}Co_{0.1}Mn_{0.1}O_2$, Denka black and styrene butadiene rubber/carboxymethyl cellulose (SBR:CMC=7:3 weight ratio) were added to a solvent at a weight ratio of 96:2:2 and mixed together to prepare a positive electrode slurry. The slurry was coated on a 20 $\mu$m thick aluminum foil using a Mathis coater, dried at 50°C for 24 hours, then rolled to manufacture a positive electrode. In this instance, the loading of the slurry was 3.3 mAh/cm$^2$, and in the rolling process, the porosity was 30 vol%.

<Preparation of lithium ion battery>

A lithium ion battery was prepared by the same method as Example 1 except that the as-prepared positive electrode was used and the electrolyte did not include $TaF_5$.

**Comparative Example 6**

A lithium ion battery was prepared by the same method as Comparative Example 5 except that $TaF_5$ was included in an amount of 0.5 wt% based on the total weight of the electrolyte.

**Experimental Example 1**

A pouch cell was fabricated using each of the lithium-sulfur batteries prepared in Examples 1 to 3 and Comparative Examples 1 to 6, and undergone a stabilization process by charging and discharging with a constant current of 0.1C at 25°C 3 times, charging and discharging at 0.2C 3 times, then charging at 0.2C and discharging at 0.3C to measure life characteristics. In this instance, the lower limit of the discharge was set to 1.8V, the upper limit of the charge was set to 2.5V, and energy density was calculated based on the third cycle of 0.1C charge and discharge. Additionally, the number of cycles to 80% of the first capacity after 0.3C discharge was calculated as the life cycle of the corresponding electrolyte.
The following TABLE 1 summarizes the calculated energy density and life cycle.

[TABLE 1]

|  | Capacity (mAh/g) | Energy density (Wh/kg) | Life (cycle) |
|---|---|---|---|
| Example 1 | 1165 | 396 | 120 |
| Example 2 | 1180 | 401 | 178 |
| Example 3 | 1168 | 397 | 150 |
| Comparative Example 1 | 1168 | 397 | 88 |
| Comparative Example 2 | 1163 | 395 | 69 |
| Comparative Example 3 | - | - | 52 |
| Comparative Example 4 | - | - | 86 |
| Comparative Example 5 | - | - | 96 |
| Comparative Example 6 | - | - | 97 |

It was confirmed that the lithium-sulfur batteries according to Example 1 to Example 3 including $TaF_5$ in an amount of 0.1 to 1.0 wt% based on the total weight of the electrolyte had sufficient capacity over 120 cycles or more. In contrast, it was confirmed that Comparative Example 1 without $TaF_5$ and Comparative Example 2 including a very large

amount of TaF$_5$ had much poorer life characteristics than Example 1 to Example 3.

Additionally, it was confirmed that Comparative Example 3 and Comparative Example 4 including the additive other than TaF$_5$ also had much poorer life characteristics than Example 1 to Example 3.

On the other side, when comparing the lithium ion battery of Comparative Example 5 without TaF$_5$ with the lithium ion battery of Comparative Example 6 including TaF$_5$ in an amount of 0.5 wt% based on the total weight of the electrolyte, it was confirmed that there was no or little change in life characteristics of the lithium ion battery depending on the presence or absence of TaF$_5$. In contrast, when comparing the lithium-sulfur battery of Comparative Example 1 without TaF$_5$ with the lithium-sulfur battery of Example 2 including TaF$_5$ in an amount of 0.5 wt% based on the total weight of the electrolyte, it was confirmed that there was a remarkable improvement in life characteristics of the lithium-sulfur battery depending on the presence or absence of TaF$_5$.

FIG. 1 shows Coulombic efficiency and capacity vs cycle life in the lithium-sulfur batteries of Example 1 to Example 3 and Comparative Example 1 and Comparative Example 2 according to the present disclosure. It was confirmed that Example 1 to Example 3 kept Coulombic efficiency and capacity constant over cycles, but the lithium-sulfur batteries of Comparative Example 1 and Comparative Example 2 had significant reductions in Coulombic efficiency and capacity. In particular, the amount of TaF$_5$ in Comparative Example 2 was higher by 0.2 wt% than Example 3, and there was a difference in Coulombic efficiency and capacity between them, so it was confirmed that the range of amounts of TaF$_5$ according to the present disclosure has criticality.

Although the present disclosure has been hereinabove described with a limited number of embodiments and drawings, the present disclosure is not limited thereto and a variety of changes and modifications may be made thereto by those skilled in the art within the technical aspect of the present disclosure and the scope of the appended claims and their equivalents.

**Claims**

1. An electrolyte for a lithium-sulfur battery comprising:

   an organic solvent; a lithium salt; and an additive,
   wherein the additive includes tantalum pentafluoride (TaF$_5$).

2. The electrolyte for the lithium-sulfur battery according to claim 1, wherein the tantalum pentafluoride is included in an amount of 0.1 to 1 wt% based on a total weight of the electrolyte for the lithium-sulfur battery.

3. The electrolyte for the lithium-sulfur battery according to claim 1, wherein the tantalum pentafluoride is included in an amount of 0.3 to 0.7 wt% based on a total weight of the electrolyte for the lithium-sulfur battery.

4. The electrolyte for the lithium-sulfur battery according to claim 1, wherein the organic solvent includes an acyclic ether or a cyclic ether.

5. The electrolyte for the lithium-sulfur battery according to claim 1, wherein the lithium salt includes at least one selected from LiFSI, LiTFSI, LiPF$_6$, LiClO$_4$, LiAsF$_6$, LiBF$_4$, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, LiI, and LiB(C$_2$O$_4$)$_2$.

6. The electrolyte for the lithium-sulfur battery according to claim 1, wherein the additive includes at least one selected from lithium nitrate (LiNO$_3$) potassium nitrate (KNO$_3$), cesium nitrate (CsNO$_3$), magnesium nitrate (MgNO$_3$), barium nitrate (BaNO$_3$), potassium nitrite (KNO$_2$) and cesium nitrite (CsNO$_2$).

7. A lithium-sulfur battery comprising:

   a positive electrode; a negative electrode; a separator between the positive electrode and the negative electrode; and an electrolyte,
   wherein the electrolyte is defined in any one of claims 1 to 6,
   wherein the positive electrode includes a sulfur-carbon composite as a positive electrode active material, and
   wherein the negative electrode includes a lithium metal as a negative electrode active material.

8. The lithium-sulfur battery according to claim 7, wherein the sulfur-carbon composite includes a sulfur-based material supported on a porous carbon material, and
   wherein the electrolyte is included in an amount of 300 wt% or less based on 100 wt% of the sulfur-based material.

9. The lithium-sulfur battery according to claim 7, wherein the sulfur-carbon composite includes a sulfur-based material supported on a porous carbon material, and
wherein the sulfur-based material is included in an amount of 60 wt% or more based on 100 wt% of the sulfur-carbon composite.

10. The lithium-sulfur battery according to claim 7, wherein the negative electrode includes a negative electrode active material layer and a protective layer on at least one surface of the negative electrode active material layer, and the protective layer includes LiF.

FIG. 1

Cycle life of lithium-sulfur battery

## INTERNATIONAL SEARCH REPORT

| International application No. |
| --- |
| **PCT/KR2023/021619** |

| A. | CLASSIFICATION OF SUBJECT MATTER |
| --- | --- |

**H01M 10/0567**(2010.01)i; **H01M 4/36**(2006.01)i; **H01M 4/38**(2006.01)i; **H01M 4/62**(2006.01)i; **H01M 10/052**(2010.01)i; **H01M 10/0569**(2010.01)i

According to International Patent Classification (IPC) or to both national classification and IPC

| B. | FIELDS SEARCHED |
| --- | --- |

Minimum documentation searched (classification system followed by classification symbols)

H01M 10/0567(2010.01); H01M 10/052(2010.01); H01M 10/0525(2010.01); H01M 10/0562(2010.01); H01M 2/16(2006.01); H01M 2/18(2006.01); H01M 4/1395(2010.01); H01M 6/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 황 (lithium sulfur), 전해질 (electrolyte), 탄탈럼 펜타플루오라이드 (TaF5), 첨가제 (additive), 황-탄소 복합체 (sulfur-carbon complex), 보호층 (protective layer), 불화리튬 (LiF)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0052213 A (LG CHEM, LTD.) 27 April 2022 (2022-04-27)<br>See paragraphs [0037], [0052], [0056], [0061] and [0082]. | 1-10 |
| Y | KR 10-2016-0022209 A (SOULBRAIN CO., LTD.) 29 February 2016 (2016-02-29)<br>See abstract; paragraphs [0039], [0045] and [0047]-[0049]; and claims 1 and 6. | 1-10 |
| A | US 2008-0171268 A1 (YAZAMI, R.) 17 July 2008 (2008-07-17)<br>See entire document. | 1-10 |
| A | US 2022-0209290 A1 (PANASONIC INTELLECTUAL PROPERTY MANAGEMENT CO., LTD.) 30 June 2022 (2022-06-30)<br>See entire document. | 1-10 |
| A | JP 2013-530488 A (LI-TEC BATTERY GMBH) 25 July 2013 (2013-07-25)<br>See entire document. | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| International application No. |
| --- |
| **PCT/KR2023/021619** |

| Patent document cited in search report | | | Publication date (day/month/year) | Patent family member(s) | | | Publication date (day/month/year) |
| --- | --- | --- | --- | --- | --- | --- | --- |
| KR | 10-2022-0052213 | A | 27 April 2022 | CN | 115606017 | A | 13 January 2023 |
| | | | | EP | 4131483 | A1 | 08 February 2023 |
| | | | | JP | 2023-522385 | A | 30 May 2023 |
| | | | | US | 2023-0163270 | A1 | 25 May 2023 |
| | | | | WO | 2022-085984 | A1 | 28 April 2022 |
| KR | 10-2016-0022209 | A | 29 February 2016 | KR | 10-2291944 | B1 | 23 August 2021 |
| US | 2008-0171268 | A1 | 17 July 2008 | CA | 2660449 | A1 | 04 September 2008 |
| | | | | CN | 101309855 | A | 19 November 2008 |
| | | | | CN | 101309855 | B | 27 March 2013 |
| | | | | CN | 101385168 | A | 11 March 2009 |
| | | | | CN | 101390234 | A | 18 March 2009 |
| | | | | CN | 101390234 | B | 23 March 2011 |
| | | | | CN | 101467287 | A | 24 June 2009 |
| | | | | CN | 101467287 | B | 05 September 2012 |
| | | | | CN | 101523644 | A | 02 September 2009 |
| | | | | EP | 1976792 | A2 | 08 October 2008 |
| | | | | EP | 1976792 | B1 | 02 July 2014 |
| | | | | EP | 1992028 | A2 | 19 November 2008 |
| | | | | EP | 1993953 | A2 | 26 November 2008 |
| | | | | EP | 1993953 | B1 | 05 September 2018 |
| | | | | EP | 1999812 | A2 | 10 December 2008 |
| | | | | EP | 2054961 | A2 | 06 May 2009 |
| | | | | ES | 2495722 | T3 | 17 September 2014 |
| | | | | JP | 2009-512133 | A | 19 March 2009 |
| | | | | JP | 2009-515813 | A | 16 April 2009 |
| | | | | JP | 2009-527441 | A | 30 July 2009 |
| | | | | JP | 2009-527875 | A | 30 July 2009 |
| | | | | JP | 2009-529222 | A | 13 August 2009 |
| | | | | JP | 2010-500725 | A | 07 January 2010 |
| | | | | JP | 2013-145758 | A | 25 July 2013 |
| | | | | JP | 5227800 | B2 | 03 July 2013 |
| | | | | JP | 5615497 | B2 | 29 October 2014 |
| | | | | JP | 5876848 | B2 | 02 March 2016 |
| | | | | KR | 10-1305474 | B1 | 06 September 2013 |
| | | | | KR | 10-1503759 | B1 | 18 March 2015 |
| | | | | KR | 10-2008-0066685 | A | 16 July 2008 |
| | | | | KR | 10-2008-0073751 | A | 11 August 2008 |
| | | | | KR | 10-2008-0095909 | A | 29 October 2008 |
| | | | | KR | 10-2008-0108267 | A | 12 December 2008 |
| | | | | KR | 10-2008-0111011 | A | 22 December 2008 |
| | | | | KR | 10-2009-0064382 | A | 18 June 2009 |
| | | | | KR | 10-2014-0105871 | A | 02 September 2014 |
| | | | | US | 2007-0077493 | A1 | 05 April 2007 |
| | | | | US | 2007-0077495 | A1 | 05 April 2007 |
| | | | | US | 2007-0218364 | A1 | 20 September 2007 |
| | | | | US | 2007-0231696 | A1 | 04 October 2007 |
| | | | | US | 2007-0231697 | A1 | 04 October 2007 |
| | | | | US | 2009-0029237 | A1 | 29 January 2009 |
| | | | | US | 2009-0258294 | A1 | 15 October 2009 |
| | | | | US | 2010-0221603 | A1 | 02 September 2010 |

Form PCT/ISA/210 (patent family annex) (July 2022)

**INTERNATIONAL SEARCH REPORT**
Information on patent family members

| International application No. |
| --- |
| **PCT/KR2023/021619** |

| Patent document cited in search report | | | Publication date (day/month/year) | Patent family member(s) | | | Publication date (day/month/year) |
| --- | --- | --- | --- | --- | --- | --- | --- |
| | | | | US | 2011-0003149 | A1 | 06 January 2011 |
| | | | | US | 2012-0270076 | A9 | 25 October 2012 |
| | | | | US | 2013-0122361 | A1 | 16 May 2013 |
| | | | | US | 2014-0030559 | A1 | 30 January 2014 |
| | | | | US | 2015-0155598 | A1 | 04 June 2015 |
| | | | | US | 7563542 | B2 | 21 July 2009 |
| | | | | US | 7794880 | B2 | 14 September 2010 |
| | | | | US | 8232007 | B2 | 31 July 2012 |
| | | | | US | 8377586 | B2 | 19 February 2013 |
| | | | | US | 8658309 | B2 | 25 February 2014 |
| | | | | US | 8968921 | B2 | 03 March 2015 |
| | | | | WO | 2007-040547 | A1 | 12 April 2007 |
| | | | | WO | 2007-098369 | A2 | 30 August 2007 |
| | | | | WO | 2007-098369 | A3 | 10 July 2008 |
| | | | | WO | 2007-098478 | A2 | 30 August 2007 |
| | | | | WO | 2007-098478 | A3 | 30 August 2007 |
| | | | | WO | 2007-126436 | A2 | 08 November 2007 |
| | | | | WO | 2007-126436 | A3 | 10 January 2008 |
| | | | | WO | 2007-143240 | A2 | 13 December 2007 |
| | | | | WO | 2007-143240 | A3 | 16 October 2008 |
| | | | | WO | 2007-146453 | A2 | 21 December 2007 |
| | | | | WO | 2007-146453 | A3 | 13 November 2008 |
| | | | | WO | 2008-105916 | A2 | 04 September 2008 |
| | | | | WO | 2008-105916 | A3 | 13 November 2008 |
| US | 2022-0209290 | A1 | 30 June 2022 | CN | 114503329 | A | 13 May 2022 |
| | | | | EP | 4046971 | A1 | 24 August 2022 |
| | | | | WO | 2021-075243 | A1 | 22 April 2021 |
| JP | 2013-530488 | A | 25 July 2013 | CN | 102893446 | A | 23 January 2013 |
| | | | | DE | 102010018731 | A1 | 03 November 2011 |
| | | | | EP | 2564461 | A1 | 06 March 2013 |
| | | | | EP | 2564461 | B1 | 02 April 2014 |
| | | | | US | 2013-0108899 | A1 | 02 May 2013 |
| | | | | WO | 2011-134613 | A1 | 03 November 2011 |

Form PCT/ISA/210 (patent family annex) (July 2022)

**EP 4 571 923 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220185078